# FASCICULE DE BREVET EUROPEEN

(11) **EP 0 577 564 B1**
(45) Date de publication et mention de la délivrance du brevet: **10.01.1996**
(21) Numéro de dépôt: 93830183.5
(22) Date de dépôt: 29.04.1993
(51) Int. Cl.: B23Q 1/00

(54) **Multiplicateur de vitesse avec triple adduction de refroidissement**
Geschwindigkeitsübersetzer mit dreifacher Kühlmittelversorgung
Speed increaser with a three-way coolant supply

(30) Priorité: 03.07.1992 IT FI920141
(43) Date de publication de la demande: 05.01.1994
(73) Titulaire: BAKUER ITALIANA S.p.A., I-50010 Scandicci Firenze (IT)
(72) Inventeur: Cioci, Mauro, I-50132 Firenze (IT)
(74) Mandataire: Martini, Lazzaro

(56) Documents cités:
- EP-A- 0 349 268
- DE-U- 9 111 525
- FR-A- 2 213 134
- WERKSTATT UND BETRIEB vol. 113, no. 7, Juillet 1980, MUNCHEN DE page 464 'Innenkühlung für Systemwerkzeuge'

## Description

La présente invention a pour objet un multiplicateur de vitesse du type à train d'engrenages épicycloïdal, lequel est destiné à être monté sur l'arbre de travail d'une machine-outil avec mouvement de travail rotatoire, pour alimenter le mouvement d'un outil de coupe avec triple adduction de lubrifiant.

Il est connu des techniciens du secteur que les multiplicateurs de vitesse les plus couramment employés dans le secteur des machines-outils avec mouvement de travail rotatoire sont du type à train épicycloïdal, avec une couronne fixe sur laquelle est engagée un ensemble de satellites qui transmettent le mouvement dérivé de l'arbre lent, c'est-à-dire d'entrée, à un engrenage solaire qui est solidaire de l'arbre rapide, c'est-à-dire de sortie.

Il est également connu que l'adduction du liquide de refroidissement à la pointe de l'outil, lequel est supporté par l'arbre de sortie du multiplicateur, est effectuée de l'une des manières suivantes:
- de l'extérieur de la machine, à travers un conduit solidaire d'une partie fixe de celle-ci; ou
- de l'intérieur du mandrin, à travers plusieurs buses fixes montées sur le nez du mandrin de la machine; ou encore
- de l'intérieur de la partie centrale du mandrin, c'est-à-dire à travers la queue de blocage du multiplicateur qui est percé longitudinalement.

Mais les machines-outils actuellement disponibles ne comportent qu'un seul des modes précités pour refroidir l'outil, et il est donc nécessaire que celui-ci soit compatible avec celui du multiplicateur de vitesse, ce qui entraîne l'impossibilité de remplacer un multiplicateur de vitesse du type avec adduction de réfrigérant de l'extérieur de la machine par un autre avec prélèvement de réfrigérant de l'intérieur du mandrin ou de la queue de blocage.

Mais ceci s'avère particulièrement désavantageux économiquement pour l'installation de production du fait que, en cas de panne d'un multiplicateur, il n'est pas possible de le remplacer par un autre immédiatement disponible mais de type différent, de sorte qu'il est nécessaire de disposer d'un bon nombre de multiplicateurs de rechange si on veut assurer une continuité constante de fonctionnement d'une installation de production.

Il est aussi connu d'après le document EP-A-349.268, qui est considéré comme l'état de la technique le plus proche, un mandrin de machine-outil comprenant un carter avec un anneau fixe, un rouleau satellite solidaire au mandrin et plusieurs rouleaux planétairs, chacun dequels est à contact avec ledit anneau et avec le rouleau satellite de manière que les rouleaux satellites roulent autour à leurs axes pendant qu'ils roulent sur le rouleau satellite et réalisant ainsi la transmission du mouvement des rouleaux planetairs au mandrin. Le carter est pourvu d'une gorge annulaire de récolte du lubrifiant lequel, pendant la rotation du mandrin, rejoint et refroidit l'anneau fixe. Mais ce mandrin connu prevoit une seule adduction de lubrifiant. En outre le document DE-U-9.111.525 décrit un outil dans lequel l'adduction du réfrigérant peut être obtenue selon deux méthodes.
Un tel outensil peut être avantageusement monté sur l'arbre de travail de plusieurs machines-outil si pourvues du multiplicateur de vitesse de la presente invention.

La présente invention a pour but principal d'éliminer l'inconvénient précité.

Ce résultat a été atteint, conformément à l'invention, en adoptant l'idée de réaliser un multiplicateur de vitesse du type à train épicycloïdal selon la revendication 1.
Des caracteristiques particulières sont prevues dans les revendications 2,3 et 4.

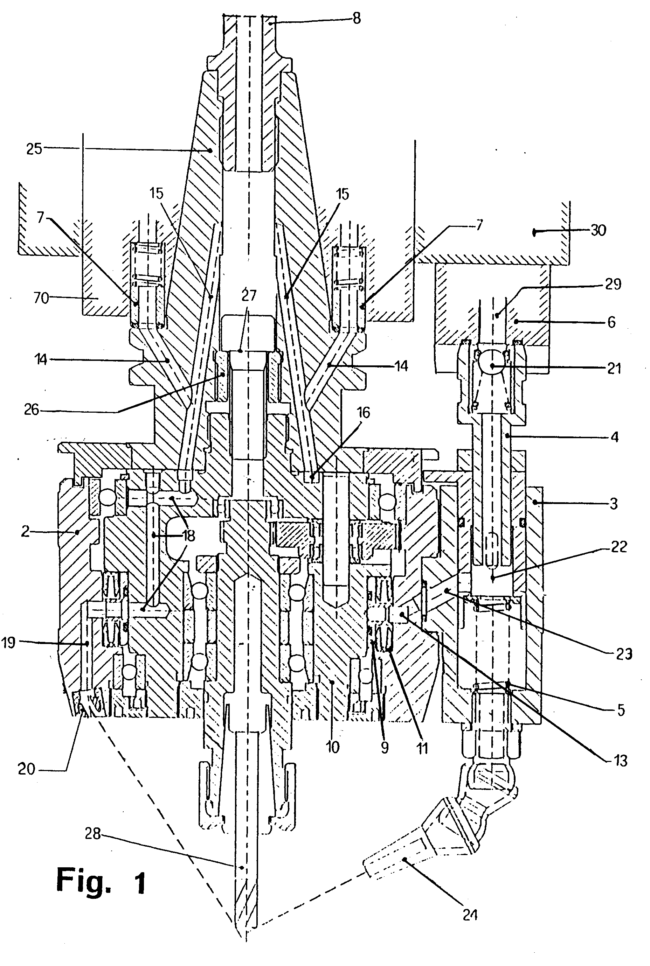

Les avantages obtenus grâce à la présente invention consistent essentiellement en ce qu'il est possible de monter un multiplicateur de vitesse sur l'arbre de travail d'une machine-outils équipée avec n'importe lequel des types précités d'adduction du réfrigérant, ce qui permet de réduire de manière considérable le nombre et la typologie des multiplicateurs de rechange, et par conséquent de réduire sensiblement le coût de fonctionnement de l'installation de production.
Ces avantages et caractéristiques de l'invention ainsi que d'autres seront plus et mieux compris de chaque homme du métier à la lumière de la description qui va suivre et à l'aide du dessin annexé donné à titre d'exemplification pratique de l'invention, mais à ne pas considérer dans le sens limitatif; dessin sur lequel la Fig. 1 représente une vue coupe transversale d'un multiplicateur de vitesse conformément à l'invention.

Réduit à sa structure essentielle et en référence à la figure du dessin annexé, un multiplicateur de vitesse du type à train d'engrenages épicycloïdal et comprenant un carter (2) solidaire du bâti (30) de la machine-outil au moyen d'une tige (4) avec blocage correspondant (6) anti-rotation, est constitué de:
- un anneau (9) collecteur du réfrigérant, lequel est solidaire et coaxial avec l'arbre (10) primaire du multiplicateur, et logé dans une gorge annulaire correspondante (13) ménagée dans le carter (2), laquelle est destinée à recevoir le réfrigérant recueilli par le collecteur (9);
- trois conduits (18) horizontaux d'alimentation du réfrigérant, lesquels sont angulairement équidistants pour prélever le réfrigérant à partir d'une cavité annulaire (16) coaxiale avec le collecteur (9) et placée au-dessus de celui-ci, cavité (16) dans laquelle plusieurs conduits (14,15) déchargent le réfrigérant prélevé soit par les buses (7) de distribution montées fixes sur le nez du mandrin de la machine, soit par la queue (8) de blocage du multiplicateur sur le mandrin;
- un conduit (23) communiquant avec une chambre (22) de récupération du réfrigérant prélevé par un conduit (29) de distribution au moyen d'une soupape (21) de non retour qui est montée à l'intérieur de la tige précitée (4) de blocage du carter (2): ledit conduit (29) étant débouchant à l'intérieur du bloc (6) anti-rotation.

La gorge annulaire précitée (13) alimente trois buses orientables (20) d'expulsion du réfigérant vers la pointe de l'outil (28), au moyen d'autant de conduits (19): lesdites buses (20) étant montées fixes sur le carter (2) et avec l'orifice de décharge orientée vers l'outil (28).

Avantageusement, conformément à l'invention, ladite gorge annulaire (13) est équipée de deux joints d'étanchéité tournants (11) pour empêcher la sortie du réfrigérant.

En outre, avantageusement, il est prévu une buse (24) d'expulsion du réfrigérant, laquelle est montée solidaire du carter (2) dans une position au-dessous de la tige (4) de blocage du carter (2) au-moyen d'un raccord fileté, cette buse (24) étant alimentée directement par la chambre de récupération (22) précitée, pour permettre d'orienter le réfrigérant vers la pointe de l'outil (28).

Il est aussi avantageusement prévu que l'arbre primaire du multiplicateur soit constitué par un élément (10) destiné à supporter l'ensemble des satellites et par un cône (25) de fixation sur le mandrin, lesquels sont rendus solidaires au moyen d'un raccord fileté (26) muni d'une vis (27) de sécurité, c'est-à-dire anti-dévissage, dans le but de permettre le montage du multiplicateur sur des mandrins dimensionnés différemment en remplaçant simplement, à chaque fois, le cône (25) de fixation. Mais ceci permet, par ailleurs, d'effectuer la réalisation des cavités annulaires (13,16) et des conduits (18,19,23) pendant la fabrication du multiplicateur.

En outre, il est avantageusement prévu que ladite tige (4) de blocage soit maintenue dans son siège au moyen d'un ressort de compression (5), lequel est logé à l'intérieur d'une bride (3) solidaire avec le carter (2), et que la position de la tige soit réglable le long de son axe pour permettre facilement son introduction ou son extraction du bloc anti-rotation (6).

L'utilisation du multiplicateur de vitesse est la suivante. S'il est prévu que le fluide réfrigérant provienne du mandrin, c'est-à-dire à travers la queue (8) de blocage, les conduits (14) sont fermés au moyen de vis scellées avec de la colle. Dans ce cas, pour utiliser les buses (20), on enlève la buse (24) et le raccord fileté de celle-ci (24) est obturé avec une vis scellée. De cette manière, le réfrigérant arrive à travers les conduits (15) jusqu'à la cavité annulaire (16) et de celle-ci, à travers les conduits (18), jusqu'au collecteur tournant (9); de ce dernier, il passe dans la gorge (13) et, à travers les conduits (19), atteint les buses orientables. Dans cette condition, le réfrigérant qui passe dans la chambre de récupération (22) à travers le conduit (23) ne peut pas sortir de la tige (4) de blocage du fait que la soupape (21) de non retour ne permet l'écoulement que de la machine vers la chambre (22) de récupération et pas dans l'autre sens.
Si on veut utiliser uniquement la buse (24) à la place des buses (20), ceux-ci sont obturées au moyen de vis scellées et par conséquent, le réfrigérant provenant de la gorge (13) passe à travers le conduit (23) dans la chambre (22) d'où il est distribué à travers la buse (24).
S'il est prévu que le réfrigérant arrive à travers les buses (7) qui sont montées sur le nez du mandrin (70) de la machine, on monte une queue (8) de blocage du type non percé. Dans ce cas, pour utiliser les buses (20), la buse (24) est enlevée et son raccord est scellé. De cette manière, le réfrigérant arrive, à travers les conduits (14), à la cavité (16) et de celle-ci à la gorge (13), de laquelle il est amené aux buses (20) à travers les conduits (19). Dans ce cas également, la sortie du réfrigérant à travers la tige (4) est empêchée par la soupape (21) de non retour.
Pour utiliser uniquement la buse (24), les buses (20) sont scellées, de sorte que le réfrigérant n'est distribué qu'à travers la buse (24).
Enfin, s'il est prévu que le réfrigérant arrive à travers le bloc (6) anti-rotation, on monte une queue (8) non percée et on obture les conduits (14) au moyen de vis scellées. Si on veut utiliser les buses (20), la buse (24) est enlevée et son raccord est obturé. Dans ce cas, le réfrigérant, à travers la soupape (21), atteint la chambre de récupération (22) et de celle-ci, à travers le conduit (23), jusqu'à la gorge (13); de celle-ci le réfrigérant arrive jusqu'aux buses (20) à travers les conduits (19).
Si on veut utiliser uniquement la buse (24), les buses (20) sont scellées, de sorte que le réfrigérant n'est distribué qu'à travers la buse (24).

## Revendications

1. Multiplicateur de vitesse du type à train d'engrenage épicycloïdal avec un carter (2) qui peut être solidarisé, au moyen d'une tige (4), avec le bâti (30) d'une machine-outil avec blocage anti-rotation correspondant (6): ledit carter (2) étant pourvu d'une gorge annulaire (13) qui est destinée à recueillir du réfrigérant et avec un conduit (23) communiquant avec une chambre (22) du réfrigérant qui peut être alimentée de l'extérieur du multiplicateur à travers un conduit (29) dans le bloc (6) anti-rotation caracterisé en ce qu'il comprend:
- un anneau (9) collecteur du réfrigérant, lequel est solidaire et coaxial avec l'arbre (10) primaire du multiplicateur et logé dans ladite gorge annulaire (13) du carter (2);
- plusieurs conduits (18) angulairement équidistants, pour prélever le réfrigérant à partir d'une cavité annulaire (16) coaxiale avec le collecteur (9) et placée au-dessus de celui-ci, cavité (16) dans laquelle plusieurs conduits (14,15) peuvent amener du réfrigérant prélevé respectivement par des buses (7) de distribution montées fixes sur le nez du mandrin de la machine (70) ou par la queue (8) de blocage du multiplicateur sur le mandrin; et en ce que ladite gorge annulaire (13) alimente plusieures buses (20) montées sur le carter (2) au moyen de conduits (19) correspondants et ladite chambre (22) alimente une buse (24) montable au-dessous de la tige (4) sur la bride (3) solidaire avec le carter (2).

2. Multiplicateur de vitesse selon la revendication 1, caractérisé en ce que son arbre primaire est constitué par un élément (10) destiné à supporter l'ensemble des satellites et par un cône (25) de fixation sur le mandrin, lesquels sont rendus solidaires au moyen d'un raccord fileté (26) muni d'une vis (27) anti-dévissage, pour permettre le montage du multiplicateur sur des mandrins dimensionnés différemment et pour permettre, en outre, la réalisation des cavités annulaires (13,16) et des conduits (18,19,23) pendant la fabrication du multiplicateur.

3. Multiplicateur de vitesse selon la revendication 1, caractérisé en ce que ladite tige (4) de blocage est maintenue dans son siège au moyen d'un ressort de compression (5), lequel est logé à l'intérieur d'une bride (3) solidaire avec le carter (2); et en ce que la tige est réglable le long de son axe pour permettre son introduction/extraction facile dans le bloc anti-rotation (6).

4. Multiplicateur de vitesse selon les revendications 1 et 3, caractérisé en ce que ladite tige (4) de blocage est équipé d'une soupape (21) de non retour qui peut intercepte ledit conduit (29).

5. Multiplicateur de vitesse selon la revendication 1, caractérisé en ce que lesdites buses (20) d'expulsion du réfrigérant sont fixées sur le carter (2) et orientables vers la pointe de l'outil (28) qui travaille.

6. Multiplicateur de vitesse selon la revendication 1, caractérisé en ce que ladite buse (24) est rendue solidaire avec le carter (2) dans une position au-dessous de la tige (4) au moyen d'un raccord fileté et en ce qu'elle est orientable vers la pointe de l'outil (28) qui travaille.

7. Multiplicateur de vitesse selon la revendication 1, caractérisé en ce que ladite gorge annulaire (13) est munie de joints d'étanchéité tournants (11) qui empêchent la sortie du réfrigérant.

## Claims

1. Speed multiplier of the epicycloid geartrain type with a casing (2) which may be made solid by means of a rod (4) with the frame (30) of a machine tool with corresponding anti-rotation blocking (6); the said casing (2) being provided with an annular throat (13) which is intended to collect refrigerant and with a pipe (23) communicating with a refrigerant (22), which may be fed from the outside of the multiplier through a pipe (29) in the anti-rotation block (6) characterised in that it includes:
- a refrigerant collector ring (9) which is solid and coaxial with the primary shaft (10) of the multiplier and situated in the said annular throat (13) of the casing (2);
- several pipes (18) equidistant in angle to take the refrigerant from an annular opening (16) coaxial with the collector (9) and situated above it, an opening (16) in which several pipes (14,15) may bring refrigerant taken respectively by distribution busses (7) fixed on the nose of the machine mandrel (70) or by the tail (8) for blocking the multiplier on the mandrel; and where the said annular throat (13) feeds several busses (20) mounted on the casing (2) by means of corresponding pipes (19) and the said chamber feeds a bus (24) which can be mounted below the rod (4) on the flange (3) solid with the casing (2).

2. Speed multiplier according to Claim 1, characterised in that its primary shaft consists of an element (10) intended to support the whole of the satellites and by a cone (25) fixing it on the mandrel, which is made solid by means of a threaded joint (26) provided with a lockable screw (27) to permit mounting of the multiplier on mandrels of different sizes and also to permit the production of annular openings (13,16) and pipes (18,19,23) during manufacture of the multiplier.

3. Speed multiplier according to Claim 1, characterised in that the said blocking rod (4) is maintained in its seating by means of a compression spring (5), which is situated inside a flange (3) solid with the casing (2); and where the rod (4) can be controlled along its axis to permit its easy introduction into/extraction from the anti-rotation block (6).

4. Speed multiplier according to Claims 1 and 3, characterised in the the said blocking rod (4) is equipped with a non-return valve (2) which can intercept the said pipe (29).

5. Speed multiplier according to Claim 1, characterised in that the said busses (20) for expelling the refrigerant are fixed on the casing and can be orientated towards the working point of the tool (28).

6. Speed multiplier according to Claim 1, characterised in that the said bus (24) is made solid with the casing (2) in a position below the rod (41) by means of a threaded joint and in that it can be orientated towards the working point of the tool (28).

7. Speed multiplier according to Claim 1, characterised in that the said annular throat (13) is provided with rotating seals (11) which prevent the refrigerant from escaping.

## Patentansprüche

1. Drehzahlvervielfacher in Art eines epizykloidalen Getriebes mit einem Gehäuse (2), das vermittels einer Stange (4) mit dem Rahmen (30) einer Werkzeugmaschine mit einer entsprechenden Drehsperre (6) verbunden werden kann, wobei das Gehäuse (2) mit einer Ringnut (13) versehen ist, die dazu dient, Kühlmittel aufzufangen, sowie mit einer Leitung (23), die mit einer Kammer (22) für das Kühlmittel in Verbindung steht, die von außerhalb des Vervielfachers durch eine Leitung (29) in der Drehsperre (6) versorgt werden kann, dadurch **gekennzeichnet,** daß er weiterhin folgende Bestandteile umfaßt:
- einen Sammelring (9) für das Kühlmittel, der mit der Primärwelle (10) des Vervielfachers koaxial fest verbunden und in der Ringnut (13) des Gehäuses (2) untergebracht ist;
- mehrere mit gleichen Winkelabständen angeordnete Leitungen (18), um das Kühlmittel von einem ringförmigen Hohlraum (16) zu entnehmen, der zu dem Sammler (9) koaxial und oberhalb von diesem angeordnet ist, wobei dem Hohlraum (16) mehrere Leitungen (14, 15) entnommenes Kühlmittel jeweils über Verteilerdüsen (7), die an der Spitze der Drehspindel (70) der Maschine befestigt sind, oder über den Festlegezapfen (8) für den Vervielfacher an der Drehspindel zuführen können;
und daß die Ringnut (13) mehrere auf dem Gehäuse (2) montierte Düsen (20) mit Hilfe entsprechender Leitungen (19) und die Kammer (22) eine Düse (24) versorgen, die unterhalb der Stange (4) auf einer mit dem Gehäuse (2) verbundenen Büchse (3) montierbar ist.

2. Drehzahlvervielfacher nach Anspruch 1, dadurch **gekennzeichnet,** daß seine Primärwelle von einem Element (10), das dazu bestimmt ist, die Gesamtheit der Satelliten zu tragen, und einem Konus (25) zur Befestigung an der Drehspindel gebildet wird, die vermittels einer Gewindeverbindung (26), die mit einer gegen Herausschrauben gesicherten Schraube (27) versehen ist, miteinander verbunden sind, um eine Montage des Drehzahlvervielfachers auf Drehspindeln mit unterschiedlichen Abmessungen zu ermöglichen und im übrigen die Realisierung der ringförmigen Hohlräume (13, 16) und der Leitungen (18, 19, 23) bei der Herstellung des Drehzahlvervielfachers zu ermöglichen.

3. Drehzahlvervielfacher nach Anspruch 1, dadurch **gekennzeichnet,** daß die Festlege-Stange (4) in ihrem Sitz vermittels einer Kompressionsfeder (5) gehalten wird, die im Inneren einer Büchse (3) untergebracht ist, die mit dem Gehäuse (2) fest verbunden ist, und daß die Stange längs ihrer Achse verstellbar ist, um ihre einfache Einführung bzw. ihr einfaches Herausziehen in die bzw. aus der Drehsperre (6) zu ermöglichen.

4. Drehzahlvervielfacher nach Anspruch 1 oder 3, dadurch **gekennzeichnet,** daß die Festlege-Stange (4) mit einem Rückschlagventil (21) versehen ist, das die Leitung (29) unterbrechen kann.

5. Drehzahlvervielfacher nach Anspruch 1, dadurch **gekennzeichnet,** daß die Düsen (20) zum Abgeben des Kühlmittels auf dem Gehäuse (2) befestigt und auf die Spitze des sich bewegenden Werkzeugs (28) orientierbar sind.

6. Drehzahlvervielfacher nach Anspruch 1, dadurch **gekennzeichnet,** daß die Düse (24) mit dem Gehäuse (2) in einer Position unterhalb der Stange (4) vermittels einer Gewindeverbindung fest verbunden ist und daß sie auf die Spitze des sich bewegenden Werkzeugs (28) orientierbar ist.

7. Drehzahlvervielfacher nach Anspruch 1, dadurch **gekennzeichnet,** daß die Ringnut (13) mit sich drehenden Dichtungen (11) versehen ist, die das Austreten des Kühlmittels verhindern.
